Europäisches Patentamt

European Patent Office

Office européen des brevets

(19)

(11)  EP 0 913 364 A2

(12)  EUROPÄISCHE PATENTANMELDUNG

(43) Veröffentlichungstag:
06.05.1999  Patentblatt 1999/18

(51) Int. Cl.⁶: **C03B 37/06**, C03B 37/02

(21) Anmeldenummer: 97120335.1

(22) Anmeldetag: 20.11.1997

(84) Benannte Vertragsstaaten:
**AT BE CH DE DK ES FI FR GB GR IE IT LI LU MC
NL PT SE**
Benannte Erstreckungsstaaten:
**AL LT LV MK RO SI**

(30) Priorität: 31.10.1997 DE 19748152

(71) Anmelder:
**Thüringer Filter Glas GmbH & Co KG
98743 Spechtsbrunn (DE)**

(72) Erfinder:
• **Greiner-Bär, Gerhard, Dipl.-Ing.
98724 Lauscha (DE)**
• **Söllner, Horst, Dipl.-Ing.
96523 Steinach (DE)**

(74) Vertreter: **Liedtke, Klaus, Dr.
Patentanwälte Dr. K. Liedtke & Partner,
Postfach 956
99019 Erfurt (DE)**

(54)    **Verfahren und Vorrichtung zur Herstellung mikrofeiner Fasern aus Glas**

(57)    Die Erfindung betrifft ein Verfahren zur Herstellung mikrofeiner Fasern aus Glas durch Ziehen und Zerfasern von Primärmonofilen in einem heißen Gasstrom sowie eine Vorrichtung zur Durchführung des Verfahrens.

Der Erfindung liegt die Aufgabe zugrunde, das Verfahren zum Ziehen und Zerfasern so weiterzuentwickeln, daß der Prozeß der Erwärmung und Zerfaserung der Primärmonofile beschleunigt wird und bei höherer Leistungsfähigkeit mikrofeine Fasern mit verbesserten Qualitätsparametern hergestellt werden.

Das Verfahren zur Herstellung der mikrofeinen Fasern ist dadurch gekennzeichnet, daß die Primärmonofile aus der Bushing oder von Glasstäben in einem Abzugswinkel α von 0° oder abweichend von 0° abgezogen, dem heißen hochbeschleunigten Gasstrom in einem Einführungswinkel β abweichend von 90° zugeführt werden, im Einführungswinkel β in den Gasstrom eindringen, vorgewärmt, erhitzt, zerfasert und durch den Gasstrom herausgetragen werden.

Die Vorrichtung ist dadurch gekennzeichnet, daß der Zerfaserungsbrenner parallel unterhalb der senkrechten Bushing angeordnet ist und Führungseinrichtungen, Walzenpaare und Rollen in einem bestimmten Anordnungswinkel δ zum Zerfaserungsbrenner gruppiert sind.

Fig. 1

**Beschreibung**

Die Erfindung betrifft ein Verfahren zur Herstellung mikrofeiner Fasern aus Glas durch Ziehen von Primärmonofilen und die Einführung dieser Monofile in einen hochbeschleunigten heißen Gasstrom, ihre Zerfaserung sowie die Vorrichtung und Anordnung zur Durchführung des Verfahrens.

Die Verfahren zur Herstellung mikrofeiner Fasern aus Primärmonofilen sind unter dem Namen „Flame Attenuation Process" und „Duplex-Process" bekannt.

Beispiele für den „Flame Attenuation Process" sind z.B. in der DE-PS 809.846 und in der DE-PS 856.944 dargestellt.
Beispiele für den „Duplex-Process" und den „Flame Attenuation Process" findet man u.a. in den Patentschriften DD-PS 95920, DD-PS 200.899, DD-PS 217.202 und DD-PS 235.863.

Diese angeführten Verfahrensgruppen beruhen darauf, daß sogenannte Primärmonofile im Ziehverfahren erzeugt und kontinuierlich einem von einem Zerfaserungsbrenner erzeugten heißen hochbeschleunigten Abgasstrom oder einer Abgasflamme zugeführt und dort zerfasert werden.

Der physikalische Ablauf des Schmelz- und Zerfaserungsvorganges der Primärmonofile in der Abgasflamme beruht auf folgenden Vorgängen:

Den quer zur Strahlachse in die Kernzone der Abgasflamme einlaufenden Primärmonofilen wird überwiegend durch konvektive Wärmeübertragung die zum Erwärmen und Schmelzen des Glases erforderliche spezifische Wärmemenge zugeführt. Die Wärmeübertragung erfolgt vorwiegend an dem quer zur Strahlachse stellenden Teil der Primärmonofile.

Das Material wird zunächst an der Oberfläche erwärmt und aufgeschmolzen. Mit zunehmender Einwirkungszeit dringt die Wärme auch in das Innere der Primärmonofile ein. Dadurch verlieren die Primärmonofile an mechanischer Festigkeit und werden durch die Strömungskräfte des Gasstromes in die Strömungsrichtung abgeknickt.

Das erzeugte Luftpolster verhindert ein vorzeitiges Abknicken der Primärmonofile und garantiert das Einlaufen der Primärmonofile in die Kernzone der Abgasflamme. Am abgeknickten Teil der Primärmonofile erfolgt keine nennenswerte Wärmeübertragung mehr, da er im Windschatten der querstehenden Teile liegt.
Für die Schmelzleistung sind daher in erster Linie die Wärmeübertragungsverhältnisse an den quer angeströmten Primärmonofilen ausschlaggebend. Vom abgewickten Teil der Primärmonofile wird unter dem Einfluß der von der Abgasflamme ausgeübten Schubspannungen das geschmolzene Material abgetragen. Da die Zähigkeit der heißen Abgasflamme sehr groß ist, erreichen die flüssigen Glasfäden bereits nach einem sehr kurzen Strömungsweg die mittlere Geschwindigkeit der Abgasflamme.

An den von der Abgasflamme transportierten Glasmonofilen sind nur die Kräfte wirksam, die durch die Relativbewegung infolge der turbulenten Schwankungsbewegungen hervorgerufen werden.

Für die Leistungsfähigkeit sowohl bezüglich der Faserfeinheit als auch der spezifischen Leistung ist neben der Geschwindigkeit und dem Turbulenzgrad der Abgasflamme vor allem die Temperatur der Abgasflamme und die Zeitdauer der Erwärmung der Primärmonofile in der Abgasflamme verantwortlich.
Die Erwärmung der Primärmonofile von Raumtemperatur auf die erforderliche Schmelztemperatur erfolgt dabei in Bruchteilen von Sekunden.

Um diese Zeitdauer noch zu verkürzen, ist nach der DD-PS 95.920 und DD-PS 159 634 als bekannt angegeben, sogenannte Vorwärmbrenner einzusetzen, die die Primärmonofile vor ihrem Eintritt in die Abgasflamme auf eine Temperatur bis kurz unter die Erweichungsgrenze erhitzen, somit die Zeitdauer des erforderlichen Erreichens der Schmelztemperatur in der Abgasflamme verkürzen und dadurch letztendlich die Leistungsfähigkeit des Verfahrens verbessern sollen.

In der praktischen Ausführung ist diese Verfahrensweise mit erheblichen Schwierigkeiten und Problemen derart verbunden, daß die Vorwärmung und dadurch nachfolgend der Zerfaserungsprozeß der Monofile ungleichmäßig erfolgen. Die Qualität der hergestellten mikrofeinen Fasern ist dadurch von Durchmesserschwankungen und der Bildung von Mikrokügelchen bzw. Shots beeinträchtigt.
Dies ist durch den aufgrund der hohen Geschwindigkeit der Abgasflamme hervorgerufenen Unterdruck bedingt, der ein gleichmäßiges Flammenbild der Vorwärmbrenner nicht gestattet bzw. zum ständigen Abreißen der Flamme führt.

Der vorliegenden Erfindung liegt daher die Aufgabe zugrunde, die Mängel der bekannten Verfahren zu beseitigen und die Herstellung von mikrofeinen Fasern aus Glas durch Ziehen und Zerfaserung von Primärmonofilen so weiterzuentwickeln, daß durch eine gleichmäßigere konstante Vorwärmung der Primärmonofile ihre wesentlich schnellere Erwärmung und Zerfaserung erfolgen kann und Fasern mit den erforderlichen besseren Qualitätsparametern bei gleichzeitig höherer Leistungsfähigkeit des Verfahrens herstellbar sind.

Die Lösung dieser Aufgabe ergibt sich durch die kennzeichnenden Merkmale der Ansprüche. Das erfindungsgemäße Verfahren ist gekennzeichnet durch den Abzug der Primärmonofile aus der Bushing oder von Glasstäben in einem Abzugswinkel $\alpha = 0°$ oder abweichend von 0° und durch die Einführung der Primärmonofile in einen Einführungswinkel $\beta$ abweichend von 90° in den Gasstrom. Dadurch wird die sich jeweils in, Gasstrom befindliche Fläche und damit das Volumen und die Masse der Primärmonofile vergrößert. Die Zeitdauer der Erwärmung der Primärmonofile im Abgasstrom wird wirkungsvoll verkürzt, so daß das Verfahren im Endeffekt mit Primärmonofilen höherer Vorschubgeschwindigkeiten oder mit Primärmonofilen größerer Durchmesser oder mit beiden gleichzeitig arbeiten kann.

Das erfindungsgemäße Verfahren ist außerdem dadurch gekennzeichnet, daß die Primärmonofile dem Gasstrom in einem Einführungswinkel $\beta = 1° < 90°$, vorzugsweise $\beta = 45°$ oder $\beta = 90° < 179°$, vorzugsweise $\beta = 135°$ zugeführt werden.

Desweiteren ist das Verfahren dadurch gekennzeichnet, daß die Primärmonofile dem Gasstrom ein- oder mehrseitig oder ringförmig in einer Reihe oder in zwei oder mehreren Reihen über- oder nebeneinander zugeführt werden. Dazu sind die Bushingvorrichtungen in unterschiedlichen Ausführungen aufgebaut und in verschiedenen Anordnungen zum Zerfaserungsbrenner ausgeführt. Die Primärmonofile können ausgehend von der Gasrichtung eine immer geringere Vorschubgeschwindigkeit oder einen geringeren Durchmesser oder bei Einführung in mehreren Reihen beides aufweisen.

Eine Variante des erfindungsgemäßen Verfahrens ist dadurch gekennzeichnet, daß bei senkrechtem Abzug der Primärmonofile aus der Bushing oder von Glasstäben nach unten durch die spezielle Anordnung des Zerfaserungsbrenners in einem Anordnungswinkel $\gamma$ die Gasflamme die Monofile in diesem Winkel $\gamma = \beta = 1° < 90° < 179°$ vorwärmt und zerfasert.

Die Vorrichtung nach der Erfindung ist dadurch gekennzeichnet, daß der Zerfaserungsbrenner stets parallel unterhalb der senkrechten Bushing mit nach oben oder unten ausgerichteter Gasflamme angeordnet ist. Zwischen der Bushing und dem Brenner sind erfindungsgemäß eine oder mehrere Führungseinrichtungen, Walzenpaare und Rollen in einem bestimmten Anordnungswinkel $\delta$, vorzugsweise $\delta = \beta$, bzw. $\delta = \beta = 90°$ angeordnet.

Erfindungsgemäß kann der Zerfaserungsbrenner auch als Ringbrenner ausgeführt und in einein Winkel $\gamma$, vorzugsweise $\gamma = \beta$, zu den nach unten abgezogenen Primärmonofilen angeordnet sind.

Die wesentlichen Vorteile der Erfindung bestehen darin, daß aufgrund des bestimmten Einführungswinkels $\beta$ abweichend von 90° die Vorwärmung der Primärmonofile direkt beim Eintritt in die Gasflamme erfolgt, so daß die Anordnung zusätzlicher Vorwärmbrenner entfällt.

Auf diese Weise wird eine wesentliche größere spezifische Leistung bei Anwendung des erfindungsgemäßen Verfahrens erreicht.
Bei einem Einführungswinkel $\beta$ der Primärmonofile in die Abgasflamme von $\beta = 45°$ oder $\beta = 135°$ wird gegenüber einem bisherigen Einführungswinkel der Primärmonofile von $\beta - 90°$ eine größere Masse von ca. 41% in der gleichen Zeitdauer auf die für die Zerfaserung erforderliche Schmelztemperatur erhitzt. In diesem gleichen Verhältnis zur Masse der erhitzten Primärmonofile kommt es zu einer spezifischen Leistungssteigerung.

Die in den Ansprüchen dargestellten Merkmale dienen der weiteren Ausgestaltung des optimalen Verfahrens. Weitere Einzelheiten, Merkmale und Vorteile der vorliegenden Erfindung ergeben sich aus der nachfolgenden Beschreibung unter Bezugnahme auf die Figuren.

Das erfindunggemäße Verfahren soll nachfolgend an Ausführungsbeispielen näher erläutert werden.

Es zeigen:

Figur 1 schematisch die einseitige Zuführung der Primärmonofile zur Gasflamme unter einem Einführungswinkel $\beta = 135°$;
Figur 2 schematisch die einseitige Zuführung der Primärmonofile zur Gasflamme unter einem Einführungswinkel $\beta = 45°$;
Figur 3 schematisch die beidseitige Zuführung der Primärmonofile zur Gasflamme unter einem Einführungswinkel $\beta = 135°$;
Figur 4 schematisch die Draufsicht der ringförmigen Zuführung der Primärmonofile zur Gasflamme;

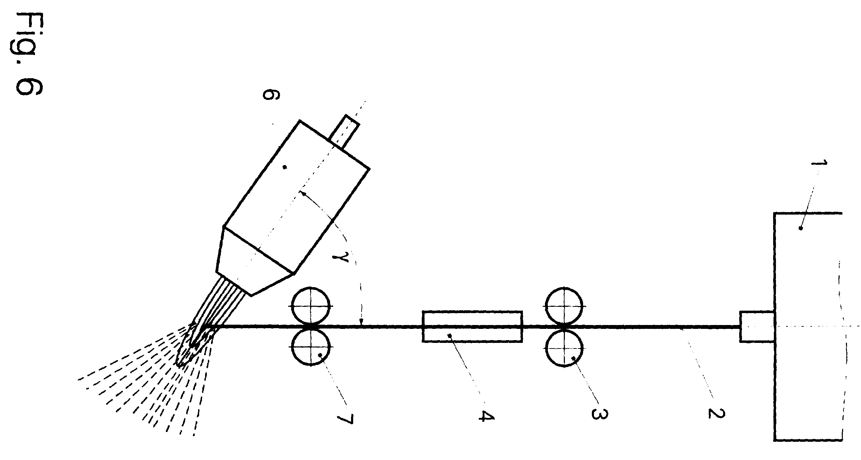

Figur 5 schematisch die ringseitige Zuführung der Primärmonofile zur Gasflamme;
Figur 6 schematisch die Anordnung des Zerfaserungsbrenners zu senkrechten Primärmonofilen im Winkel $\gamma = 45°$.

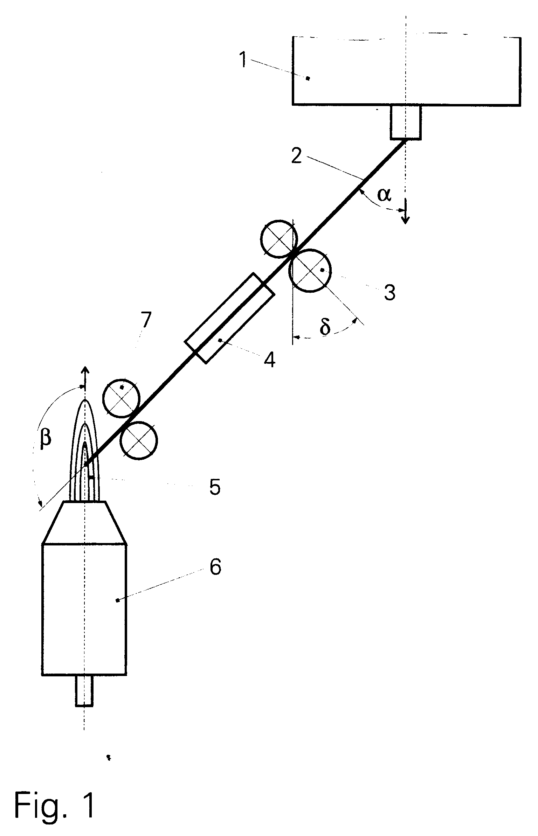

Wie aus Figur 1 ersichtlich ist, werden in einer Bushing 1, die aus einer Pt/Rh-Legierung besteht und direkt elektrisch beheizt wird, Primärmonofile 2 durch ein Gummiwalzenpaar 3 kontinuierlich abgezogen. Mittels einer Führungseinrichtung 4 werden die Primärmonofile 2 unter einem Einführungswinkel $\beta$ von ca. 135° der Abgasflamme 5 zugeführt, die von einem Zerfaserungsbrenner 6 erzeugt wird. Die Primärmonofile 2 werden zusätzlich durch Rollen 7 geführt.

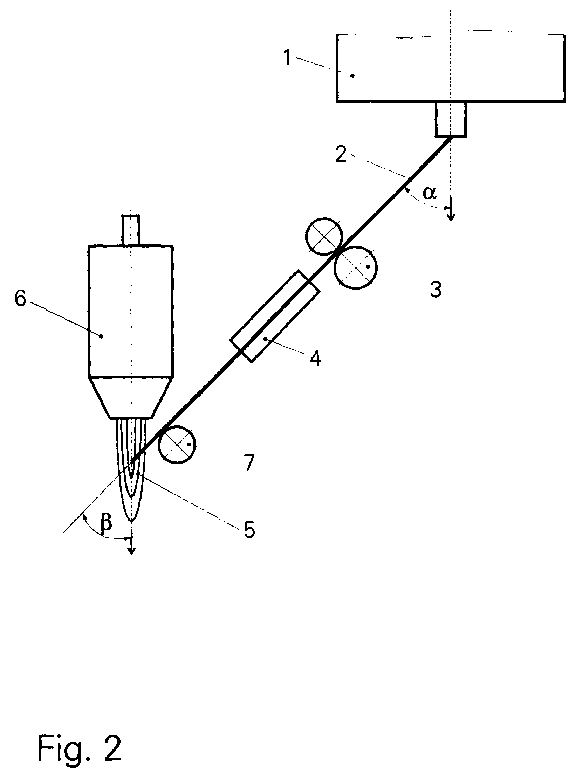

In Figur 2 werden wie in Figur 1 aus einer Bushing 1 die Primärmonofile 2 mittels des Gummiwalzenpaares 3 abgezogen.
Die Primärmonofile 2 gelangen unter einem Einführungswinkel $\beta$ von ca. 45° in die vom Zerfaserungsbrenner 6 erzeugte Abgasflamme 5 und werden dort zerfasert.

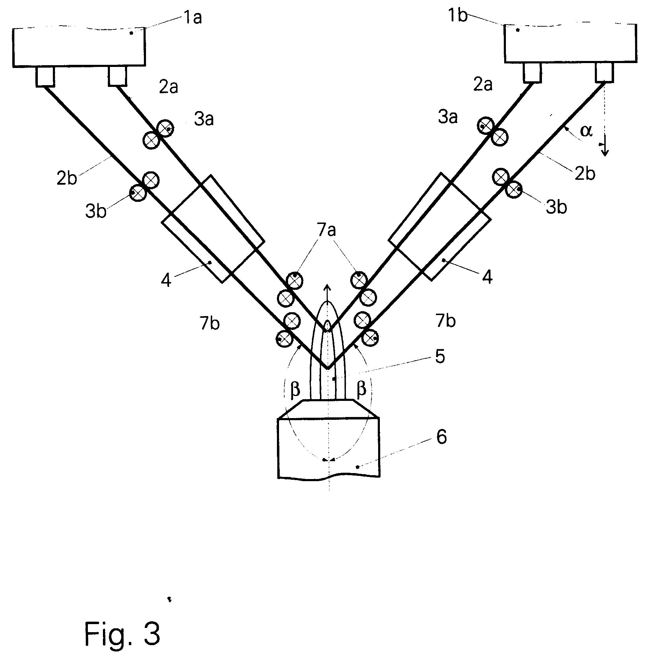

In Figur 3 ist schematisch vereinfacht ein drittes Ausführungsbeispiel dargestellt. Hier werden aus zwei gegenübergestellten Bushings 1a und 1b die Primärmonofile 2a und 2b in Einführungswinkeln $\beta$ von 135° durch die Gummiwalzenpaare 3a und 3b kontinuierlich abgezogen.

Die Primärmonofile 2a weisen gegenüber den Primärmonofilen 2b nur 60% der Vorschubgeschwindigkeit und nur 90% des Monofildurchmessers auf.

Mittels der Führungseinrichtung 4 und der Rollen 7a und 7b gelangen die Primärmonofile unter den Winkeln $\beta$ von ca. 135° in die vom Zerfaserungsbrenner 6 erzeugte Abgasflamme 5 und werden dort zerfasert.

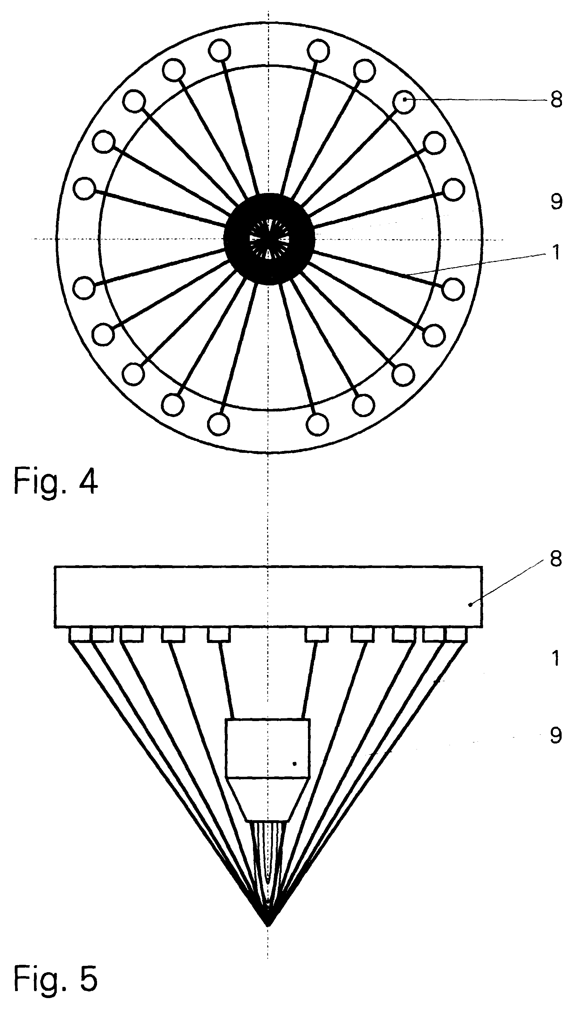

Figur 4 zeigt eine ringförmige Bushing 8 mit ringförmiger Zuführung der Primärmonofile zur zentrisch angeordneten Gasflamme 5 in Draufsicht. Der Zerfaserungbrenner 6 mit der Gasflamme 5 kann dabei in unterschiedlichem Abstand unterhalb der ringförmigen Bushing 8 angeordnet sein, so daß die abgezogenen Primärmonofile 1 in verschiedenen Abzugswinkel $\alpha$ = 0° < 90° vorzugsweise $\alpha$ = 10° < 90°, zur Bushing 1 abgezogen und ebenfalls unter verschiedenen Einführungswinkeln $\beta$ = 10° < 90° dem Zerfaserungsbrenner 6 zugeführt werden. Die mehr- oder allseitige Zuführung der Primärmonofile 1 zur Gasflamme 5 des mit hohem Druck aus dem Zerfaserungsbrenner 6 ausströmenden Gasstromes kann durch unterschiedlich ausgebildete Bushingvorrichtungen erfolgen. Abzugswinkel $\alpha$ und Einführungswinkel $\beta$ der Primärmonofile haben dabei vorzugsweise eine Größe von $\alpha$, $\beta$ = 1° < 90°.

Der Zerfaserungsbrenner 6 kann auch als Ringbrenner 9 ausgeführt und im Zentrum unterhalb einer ringförmigen Bushing 1 angeordnet sein.

Nach Figur 6 ist schematisch eine Anordnung dargestellt, bei der die Primärmonofile 1 senkrecht nach unten abgezogen und der Zerfaserungsbrenner 6 in einem Anordnungswinkel $\gamma$ = 1° < 90° > 179° in Schrägstellung zu den abgezogenen Monofilen angeordnet ist.

Führungseinrichtungen, Rollen 7 oder Walzenpaare für die abgezogenen Primärmonofile 2 sind in einem bestimmten Anordnungswinkel $\delta$ zum Zerfaserungbrenner 6 angeordnet und bestimmen durch ihre Anordnung für die Monofile die Abzugs-, Führungs- und Einführungsrichtung in den Gasstrom. Vorzugsweise entsprechen sich die Größen der Winkel $\delta = \beta$ oder $\delta = \gamma$.

Die erfindungsgemäßen Vorrichtungen mit verschiedenen Anordnungen der Bushing 1 und des Zerfaserungsbrenners 6 zueinander ermöglichen eine schnelle Erwärmung einer größeren Querschnittsfläche jedes Monofils 1 und damit einen Wegfall der bekannten Vorwärmbrenner. Damit arbeitet das erfindungsgemäße Verfahren mit optimalem reduziertem Vorrichtungsaufwand effektiver.

<u>Aufstellung der verwendeten Bezugszeichen</u>

| 1 | Bushing |
|---|---|
| 1a, 1b | Bushings |
| 2 | Primärmonofil |
| 2a, 2b | Primärmonofile |
| 3 | Walzenpaar |
| 3a, 3b | Walzenpaare |
| 4 | Führungseinrichtung |
| 5 | Gasstrom/Gasflamme |
| 6 | Zerfaserungsbrenner |
| 7 | Rolle |
| 7a, 7b | Rollen |
| 8 | ringförmiger Bushing |
| 9 | ringförmiger Zerfaserungsbrenner |
| $\alpha$ | Abzugswinkel Primärmonofile |
| $\beta$ | Einführungswinkel Primärmonofile |
| $\gamma$ | Anordnungswinkel Zerfaserungsbrenner |
| $\delta$ | Anordnungswinkel für Baugruppen 3, 4, 7 |

**Patentansprüche**

1. Verfahren zur Herstellung mikrofeiner Fasern aus Glas durch Ziehen von Primärmonofilen aus einer Bushing oder von Glasstäben und kontinuierliche Einführung der Primärmonofile in einen hochbeschleunigten heißen Gasstrom, **dadurch gekennzeichnet**, daß die Primärmonofile

    - aus der Bushing oder von Glasstäben in einem Abzugswinkel $\alpha$ von 0° oder abweichend von 0° abgezogen und
    - dem Gasstrom in einem Einführungswinkel $\beta$ abweichend von 90° zugeführt werden,
    - im Einführungswinkel $\beta$ in den Gasstrom eindringen und dabei vorgewärmt werden sowie
    - anschließend im Gasstrom zerfasert und durch diesen als mikrofeine Fasern herausgetragen werden.

2. Verfahren nach Anspruch 1, **dadurch gekennzeichnet**, daß die Primärmonofile dem Gasstrom in einem Einführungswinkel $\beta$ = 1° < 90°, vorzugsweise in einem Einführungswinkel $\beta$ = 45° zugeführt werden.

3. Verfahren nach Anspruch 1, **dadurch gekennzeichnet**, daß die Primärmonofile dem Gasstrom in einem Einführungswinkel $\beta$ = 90° < 179°, vorzugsweise in einem Einführungswinkel $\beta$ = 135° zugeführt werden.

4. Verfahren nach einem der Ansprüche 1 bis 3, **dadurch gekennzeichnet**, daß die Primärmonofile dem Gasstrom ein- oder mehrseitig zugeführt werden.

5. Verfahren nach einem der Ansprüche 1 bis 3, **dadurch gekennzeichnet**, daß die Primärmonofile dem Gasstrom ringförmig zugeführt werden.

6. Verfahren nach einem der Ansprüche 1 bis 5, **dadurch gekennzeichnet** daß die Primärmonofile dem Gasstrom in zwei oder mehreren Reihen über- oder nebeneinander zugeführt werden.

7. Verfahren nach Anspruch 6, **dadurch gekennzeichnet**, daß die Reihen der Primärmonofile ausgehend von der Gasrichtung eine geringere Vorschubgeschwindigkeit oder einen geringeren Monofildurchmesser oder beides zugleich aufweisen.

8. Verfahren nach einem der Ansprüche 1 bis 7, **dadurch gekennzeichnet**, daß die Primärmonofile

aus der Bushing oder von Glasstäben in einem Abzugswinkel $\alpha$ < 90°, vorzugsweise $\alpha$ = 45°, abgezogen werden.

9. Verfahren nach einem der Ansprüche 1 bis 8, **dadurch gekennzeichnet**, daß die Primärmonofile senkrecht aus der Bushing oder von Glasstäben nach unten abgezogen und anschließend durch Führungseinrichtungen in einem bestimmten Anordnungswinkel $\delta$ < 90° abgelenkt werden.

10. Verfahren nach Anspruch 1, **dadurch gekennzeichnet**, daß die Primärmonofile senkrecht aus der Bushing oder von Glasstäben nach unten abgezogen und durch den Gasstrom in einem Anordnungswinkel $\gamma$ = 1° < 90° < 179° vorgewärmt und zerfasert werden.

11. Vorrichtung zur Herstellung mikrofeiner Fasern aus Glas durch Ziehen von Primärmonofilen nach Anspruch 1, bestehend aus einer Bushing, Führungseinrichtungen und Zerfaserungsbrenner, **dadurch gekennzeichnet**, daß der Zerfaserungsbrenner (6) mit senkrecht nach oben oder unten ausgerichteter Gasflamme (5) parallel unterhalb der senkrechten Bushing (1) angeordnet ist und daß zwischen Bushing (1) und Zerfaserungsbrenner (6) mehrere Führungseinrichtungen (4), Walzenpaare (3) und/oder Rollen (7) für die Primärmonofile (1) in einem bestimmten Anordnungswinkel $\delta$ abweichend von 90° zum Zerfaserungsbrenner (6) gruppiert sind.

12. Vorrichtung nach Anspruch 11, **dadurch gekennzeichnet**, daß die Führungseinrichtungen (4), Walzenpaare (3) und Rollen (7) im Anordnungswinkel $\delta$, vorzugsweise im Anordnungswinkel $\delta$ = $\beta$ zum Zerfaserungsbrenner (6) angeordnet sind.

13. Vorrichtung nach einem der Ansprüche 11 und 12, **dadurch gekennzeichnet**, daß der Zerfaserungsbrenner (6) in einem Anordnungswinkel $\gamma$ abweichend von 90°, vorzugsweise in einem Anordnungswinkel $\gamma$ = 1° < 90° < 179° zu den senkrecht abgezogenen Primärmonofilen (1) angeordnet ist.

14. Vorrichtung nach einem der Ansprüche 11 bis 13, **dadurch gekennzeichnet**, daß der Zerfaserungsbrenner (6) als Ringbrenner (9) ausgeführt und in einem Anordnungswinkel $\gamma$ abweichend von 90° zu den senkrecht abgezogenen Primärmonofilen (1) angeordnet ist.

Fig. 1

Fig. 2

Fig. 3

Fig. 4

Fig. 5

Fig. 6